# EUROPEAN PATENT SPECIFICATION

(11) **EP 2 057 774 B1**
(45) Date of publication and mention of the grant of the patent: **24.07.2013**
(21) Application number: 07793645.8
(22) Date of filing: 23.08.2007
(51) Int. Cl.: H04L 1/18

(54) **MBMS PACKET DATA TRANSMISSION AND RECEIVING BASED ON A CELLULAR SYSTEM**
MBMS-PAKETDATENÜBERTRAGUNG UND EMPFANG AUF DER BASIS EINES ZELLULARSYSTEMS
TRANSMISSION ET RÉCEPTION DE DONNÉES MBMS EN PAQUETS BASÉES SUR UN SYSTÈME CELLULAIRE

(30) Priority: 23.08.2006 KR 20060079785; 07.09.2006 KR 20060086121; 28.09.2006 KR 20060094657
(43) Date of publication of application: 13.05.2009
(73) Proprietor: Electronics and Telecommunications Research Institute, Yuseong-gu Daejon 305-350 (KR)
(72) Inventor: KIM, Jung-Im, Daejon 302-280 (KR); KO, Young-Jo, Daejon 302-747 (KR); KIM, Jae-Heung, Daejon 305-728 (KR); LEE, Kyoung-Seok, Daejon 305-509 (KR); RYU, Byung-Han, Daejon 305-755 (KR); BANG, Seung-Chan, Daejon 302-280 (KR)
(74) Representative: Betten & Resch
(86) International application number: PCT/KR2007/004042
(87) International publication number: WO 2008/023945

(56) References cited:
- WO-A1-2005/034397
- WO-A1-2005/104421
- WO-A2-96/22641
- US-A1- 2005 122 898
- US-B1- 6 522 650

## Description

### TECHNICAL FIELD

The present invention relates to a method for transmitting and receiving multimedia broadcast multicast service (MBMS) data in a packet based cellular system; and, more particularly, to a method for transmitting and receiving MBMS data to a plurality of mobile stations based on point to multipoint in a packet based cellular system using a hybrid automatic repeat request (HARQ) scheme.

### BACKGROUND ART

A multimedia broadcast multicast service (MBMS) is a broadcasting service provided to a plurality of mobile stations through a mobile communication network. However, various errors are generated in a signal while the signal travels through a radio channel due to the fading of the radio channel and an interference signal.

A mobile communication system uses one of an automatic repeat request (ARQ) scheme, a forward error correction scheme, and a hybrid automatic repeat request (HARQ) in order to correct the errors.

The ARQ scheme and the HARQ scheme transmit data on an assumption that all of receivers are one and inform whether data is successfully received or failed through a feedback channel. The ARQ scheme may generate long delay because the ARQ scheme reports the receipt of data packet through a feedback channel after a plurality of data packets are received.

The HARQ scheme improves an error correction capability by retransmitting data and performing the error correction code of a physical layer at the same time. That is, the HARQ scheme does not discard previous data packets with error generated. The HARQ scheme inputs the data packet with the error to an error correction decoder when a retransmitted data packet is decoded in order to improve the error correction capability. Since an error is generated at only a part of a packet in general, the error correction capability is improved if the. packet with the error inputs the decoder without dumping the packet with the error.

The data amount to store significantly increases to use an error correction code of a physical layer. In order to reduce the data amount to store, the HARQ scheme is quickly informed whether error is generated in data or not through a feedback channel and rapidly performs retransmission.

The HARQ scheme is generally divided into an incremental redundancy (IR) method and a chase combining (CR) method. The IR method adds a parity bit to data to retransmit when the data is retransmitted in order to obtain a gain of channel coding. The CR method retransmits data identical to previously transmitted data. Although the IR method is better than the CR method in the performance thereof, the IR method has a disadvantage that a receiver has higher complexity than that of the CR method. Although the CR method is better than the IR method in the complexity of the receiver, the CR method has a disadvantage that the performance thereof is worse than that of the RI method.

In 3rd Generation Partnership Project (3GPP) Wideband Code Division Multiple Access (WCDMA) system, a broadcasting service such as MBMS corrected error using an error correction code such as forward error correction in an application layer without using the ARQ scheme or the HARQ scheme. When the same MBMS data is transmitted to a plurality of cells at the same time, a mobile station obtained further higher signal by combining signals of a plurality of cells in order to reduce the probability of error generation. As a method of combining the signals of a plurality of cells, a soft combining method and a selective combining method were specified in the 3GPP standard. However, in case of a single cell MBMS service in a WCDMA system according to the related art, an error correction code is only used to correct errors since WCDMA system cannot use the soft combining method and the selective combining method.

Therefore, a single cell MBMS service has comparatively low error correction efficiency.

The WCDMA system transmits MBMS data to mobile stations based on point-to-point if the number of the mobile stations receiving a broadcasting service is comparatively small.

On the contrary, the WCDMA system transmits MBMS data to mobile stations based on point-to-multipoint if the number of the mobile stations receiving a broadcasting service is comparatively large.

In other words, the WCDMA system according to the related switches the point-to-multipoint method to the point-to-point method to transfer MBMS data if the number of the mobile stations is comparatively small because the point-to-multiple method generates more interference at neighbor cells.

In general, the point-to-multipoint method uses a secondary common control channel (S-CCPCH), and the point-to-point method uses a dedicated physical channel (DPCH). Since the S-CCPCH channel use about 5% to 10% of the power of a base station, the point-to-multipoint method uses the large amount of resources.

On the contrary, the DPCH channel uses below 5% of the power.

Therefore, less power can be used by increasing or decreasing power according to a radio channel state.

A base station needs information about the number of mobile stations receiving the broadcasting service in order to switch the point-to-multipoint method to the point-to-point method. In general, the base station selects one of the point-to-point method and the point-to-multipoint method to transmit data when the base station initially provides a service. When the number of mobile stations changes due to handover, the base station confirms the number of the mobile stations again and selects the transmission method based on the checked number of the mobile stations.

The confirming of the number of the mobile stations in the initial stage of the service is referred as a counting process, and the confirming of the number of the mobile stations in the middle state of the service is referred as a recounting process. The base station informs the mobile stations of the counting process or the recounting process when the base station performs the counting process or the recounting process. Then, a mobile station informs the base station through random access that the mobile station wants to receive a service. However, the random access uses a limited code, collision may occur if a plurality of mobile stations perform the random access at the same time. Since the random access is not used only by mobile stations receiving the MBMS, the base station needs to control the collision of the random access. In order to control the collision, the base station informs the mobile stations of a random access trial probability. The base station continuously manages the random access trial probability and updates the random access trial probability according to the states of mobile stations in a cell.

In the MBMS, data can be transmitted using either one of the point-to-point method and the point-to-multipoint method. However, the point-to-point method and the point-to-multipoint method have difference in the operation of a feedback channel. That is, in the point-to-point method, one mobile station sends a response using a feedback channel. On the contrary, a plurality of mobile stations use the feedback channel to send a response in the point-to-multipoint. That is, a plurality of mobile stations use the feedback channel at the same time to transmit the response in the point-to-multipoint method. Therefore, a large amount of wireless resources are used if the feedback channel is allocated to each of the mobile stations to provide the MBMS to the large number of mobile stations in the point-to-multipoint method.

Therefore, there is a demand for developing a method for minimizing the usage of resources when MBMS is provided based on a point-to-multipoint method in a packet based cellular system. Also, there is a demand for developing a method for employing a HARQ scheme to receive a MBMS with a low packet error rate when the MBMS is provided based on a point-to-multipoint method in a packet based cellular system.

WO 2005/034397 A1 discloses multicast communication systems and in particular the Implementation of a random access uplink channel, which can be used, e.g., for transmission of acknowledgement messages for received data. In order to prevent frequent collisions on said channel, the transmission of acknowledgement messages is spread at least over time or, additionally, with regard to another distinguishing channel property, e.g. a RACH sub-channel or RACH-signature.

### DETAILED DESCRIPTION OF THE PRESENT INVENTION

An embodiment of the present invention is directed to providing a data transceiving method for reducing a receive error rate by applying a hybrid automatic repeat request (HARQ) scheme while minimizing resource usage in transmitting of MBMS data to a plurality of mobile stations based on a point-to-multipoint method in a packet based cellular system.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

In a method for transmitting and receiving MBMS data in a packet based cellular system according to the present invention, a cell radio network temporary identifier (C-RNTI) which is a unique service group identifier, is allocated to mobile stations receiving MBMS, thereby enabling mobile stations to receive downlink control signals. The downlink control signal includes the resource information of retransmission data and the resource information of a feedback channel for retransmission data.

In the method for transmitting and receiving MBMS data in a packet based cellular system according to the present invention, MBMS data is transmitted based on a point-to-multipoint method without performing complicated switching operation such as switching to a point-to-point method.

The advantages, features and aspects of the invention will become apparent from the following description of the embodiments with reference to the accompanying drawings, which is set forth hereinafter.

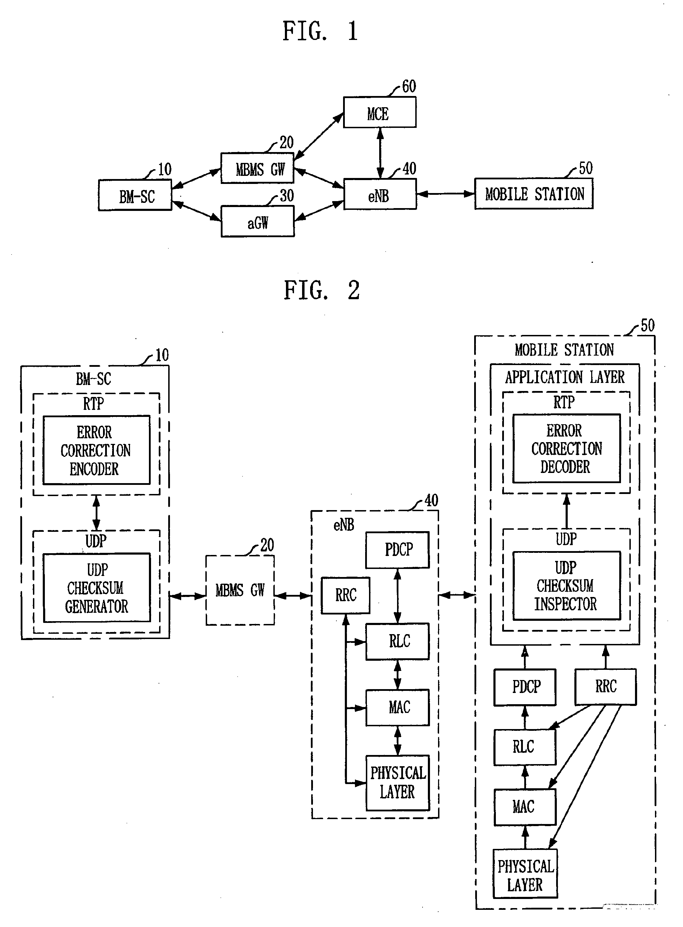

Figs. 1 and 2 are block diagrams illustrating a MBMS network whether the present invention is applied to. That is, Figs. 1 and 2 show a 3GPP LTE UTRAN system, where the 3GPP LTE UTRAN stands for a 3^{rd} Generation Partnership Project Long Term Evolution UMTS Terrestrial Radio Access Network, and UMTS stands for Universal Mobile Telecommunications System.

Referring to Figs. 1 and 2, the MBMS network includes a service sensor BM-SC 10 for providing a multimedia broadcast multicast service (MBMS), a MBMS gateway GW 20 as a MBMS dedicated gateway, an access gateway aGW 30 for supporting a unicast service that is not MBMS, and a base station eNB 40. The MBMS network further includes a MBMS coordination entity MCE 60 for scheduling the transmission of MBMS packets. In other words, the MBMS coordination entity 60 is connected the MBMS gateway 20 and the base station 40, manages base stations in a plurality of cells, and manages schedules to transmit MBMS packets through the cells.

In Figs 1 and 2, the MBMS gateway 20 and the access gateway 30 are separated. However, the MBMS gateway 20 and the access gateway 30 may be integrally embodied.

In general, the MBMS service sensor BM-SC 10 employs a real time protocol (RTP) and a user datagram protocol (UDP). The RTP includes an error correction encoder, and the UDP includes a checksum generator.

A wireless interface protocol of the base station 40 and a mobile station 50 is constituted of a physical layer, a data link layer, and a network layer in a horizontal view. The wireless interface protocol is constituted of a user plane for transmitting data information and a control plane for transmitting a control signal in a vertical view. The protocol layers may be classified into a first layer L1, a second layer L2, and a third layer L3 based on lower three layers in an open system interconnection (OSI) standard model which is widely known in a communication system.

The physical layer, the first layer, provides an information transfer service to upper layers using a physical channel. The physical layer is connected through a medium access control (MAC) layer and a transport channel. Data is transferred between the MAC layer and the physical layer through the transport channel.

The MAC layer, the second layer, provides an information transfer service to a radio link control (RLC) layer through a logical channel. The RLC layer supports reliable data transmission and performs a segmentation and concatenation function in a RLC service data unit (SDU) from the upper layer.

The RRC layer, the lowest layer of the three layers, is defined only in the control plane. The RRC layer controls a logical channel, a transport channel, and a physical channel related to the configuration, the reconfiguration, and the release of the radio bearers.

A packet data convergence protocol (PDCP) may be mounted on the RLC layer for compressing and expanding a packet header.

The MBMS data is transmitted to from the base station 40 to the mobile station 50 through the MBMS gateway 20. The physical layer of the mobile station 50 receives data passing through the radio channel, decodes the received data, and inspects a cyclic redundancy check (CRC) error.

According to 3GPP Release-6 TS25.322, the RLC layer of the base station 40, the transmitting side, generates a protocol data unit by combining or dividing the service data units (SDU). Herein, a communication system such as the MBMS system consists of several protocols. The SDU denotes an input data unit, and the PDU is an output data unit.

The base station eNB 40 decides the size of the PDU when the MBMS is ongoing. When the SDU is inputted to the RLC layer, the base station divides the SDU not to be larger than the size of the PDU if the SDU is larger than the PDU. If a previous received SDU remains divided, the base station generates a PDU by concatenating the previous arrived SDU with the currently received SDU.

After the PDU generated at the RLC layer passes the MAC layer, a CRC bit is added to the PDU. Then, the PDU is encoded and transmitted to the mobile station through the radio channel.

The physical layer of the mobile station performs a channel decoding process, a CRC check process to determine whether an error is generated at a data packet or not, and transfers the CRC checking result and the data packet to the RLC layer through the MAC layer excepting a CRC bit.

A 3GPP LTE based system for non-MBMS service uses a dedicated control channel (DCCH) and a dedicated traffic channel (DCCH) as a logical channel. A control signal is transmitted through the DCCH which is a dedicated control channel, and data is transmitted through the DTCH which is a dedicated traffic channel.

The MBMS service uses a multicast control channel (MCCH) and a MBMS traffic channel (MTCH) as a logical channel.

A control signal is transmitted through the MCCH which is a MBMS dedicated control channel, and data is transmitted through the MTCH which is a MBMS data dedicated channel.

A packet based cellular system informs mobile stations of scheduling information about a time and a frequency for transmitting and receiving data using a downlink control signal such as a L1/L2 control signal. The downlink means a link from a base station to a mobile station.

In general, downlink data starts to transmit at a time of transmitting a control signal such as L1/L2 control signals. Also, control information about a plurality of mobile stations may transmit at the same time through the downlink control signals. A space for each control signal allocated to a corresponding mobile station may be identified using an identifier of the corresponding mobile station. Therefore, a mobile station must to be aware of an identifier allocated to oneself to receive a downlink control signal. The identifier is referred as a cell radio network temporal identifier (C-RNTI). An identifier may be allocated uniquely to a mobile station, or a group identifier may be allocated to a plurality of mobile stations.

In case of a unicast service, the packet based cellular system uses a hybrid automatic repeat request (HARQ) scheme. The unicast service is non-MBMS service. In more detail, a base station transmits downlink data to a mobile station. The mobile station receives the data from the base station and reports to the base station whether the data is successfully received or not through an uplink link feedback channel. Then, the base station informs the mobile stations which resource is used as a feedback channel at an initial point of a service. Also, a location of a feedback channel may be decided according to a radio resource used to transmit the L1/L2 control signal to the mobile station. In general, the mobile station uses an assigned frequency and a given feedback channel after a predetermined time passes after the mobile station receives the data from the base station.

Herein, the location of a feedback channel may be static or may change dynamically. If the feedback channel is static, a mobile station uses a resource that is decided by a base station at an initial stage of a service as the feedback channel. If the feedback channel dynamically changes, the base station informs the mobile station of information about the feedback channel.

When the mobile station successfully receives data without error, the mobile station transmits an acknowledgement ACK to the base station through a feedback channel as positive response. If not, the mobile station transmits a negative acknowledgement NACK to the base station through a feedback channel.

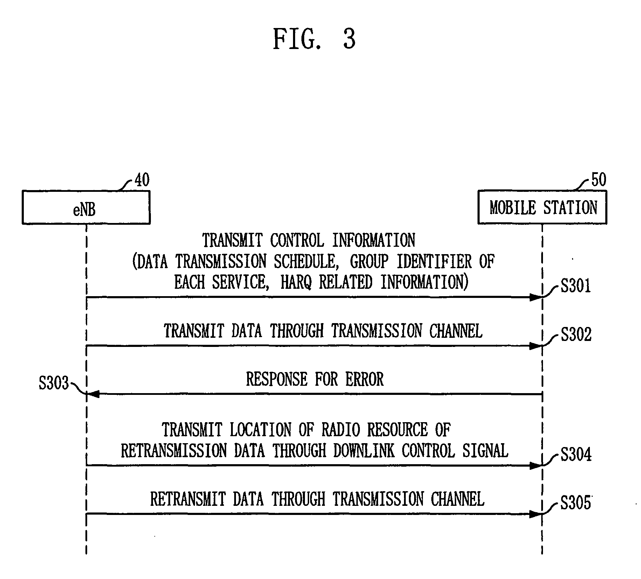

Fig. 3 is a diagram for describing a method for transmitting MBMS data in a packet base cellular system in accordance with an embodiment of the present invention. A MBMS data packet may be transmitted from a single base station to a plurality of mobile stations. Also, the MBMS data packet may be transmitted from a plurality of base station to a plurality of mobile stations. That is, the same MBMS data packet is transmitted from a plurality of base station to a plurality of mobile stations. A mobile station receives MBMS data transmitted from a plurality of base station as one signal at the same time. Hereinafter, a method for transmitting a MBMS data packet from a base station and a method for transmitting a MBMS data packet from a plurality of base stations will be described.

The method for transmitting MBMS data packet from a single base station may be different from the method for transmitting MBMS data packet from a plurality of base stations in the operation of a feedback channel. For example, a feedback channel is allocated to each mobile station when a single base station transmits a MBMS data packet. A feedback channel allocated to each mobile station is a dedicated feedback channel. When a plurality of base stations transmit a MBMS data packet, a feedback channel is not allocated to each channel. That is, a plurality of mobile stations share a feedback channel. Such a channel is referred as a common feedback channel. In this case, a base station may have one or a plurality of common feedback channels. The base station can variably allocate common feedback channel according to the number of mobile stations and a radio channel environment when the base station has a plurality of common feedback channels. The base station manages the feedback channels. The base station transmits information about the feedback channels to mobile stations at the MBMS service initial stage. The base station also transmits information about changed feedback channel to mobile stations when it is necessary to change the feedback channel.

Furthermore, the base station transmits information about a scrambling code to mobile stations, which is used by each mobile station for transmitting an acknowledgment through a feedback channel at a MBMS service initial stage. In other words, the scrambling code is a code allocated by a base station to reduce interference between mobile stations when mobile stations transmit a response for informing whether a received data includes an error or not through a feedback channel

In the method of transmitting a MBMS data packet from a single base station, the scrambling code differs at each base station, and different unique codes are allocated to each of mobile stations. That is, when a base station receives a negative acknowledgment from mobile stations, the base station must have a capability to identify each of mobile stations in a corresponding cell. In order to identify, it is required to allocate the scrambling code to be identify by each cell. For example, the scrambling code is a code obtained by multiplying a constant amplitude zero auto-correction (CAZAC) code with a hadamard (HD) code. The CAZAC code identifies a cell and a mobile station, and the HD code identifies mobile stations using several codes, thereby reducing interference.

In the method for transmitting a MBMS data packet from a plurality of base stations, it is not necessary that the scrambling code differs in each mobile station, and the unique code is not allocated to each of mobile stations. In the method for transmitting a MBMS data packet from a plurality of base stations, a base station provide one or a plurality of scrambling codes to each of mobile stations. In case of providing a plurality of scrambling codes, each of the mobile stations may select one of scrambling codes randomly.

Referring to Fig. 3, a base station transmits scheduling information about data transmission in a MBMS service initial stage, HARQ related information, and a group identifier for MBMS to mobile stations through a dedicated control channel such as MCCH and a transport channel mapped to the decided control channel at step S301. In the method for transmitting a MBMS data packet from a single base station, the MCCH, a logical channel, is used as the dedicated control channel, and a downlink-shared channel (DL-SCH) is used as the transport channel mapped to the MCCH. In the method for transmitting a MBMS data packet from a plurality of base stations, the MCCH is used as the dedicated control channel, and the multicast channel (MCH) is used as the transport channel mapped to the MCCH. The schedule information and the HARQ related information and the group identifier are information commonly received at the mobile stations. Therefore, the dedicated control channel, MCCH, must be repeatedly transmitted at a regular cycle to enable mobile stations to received MBMS. The base station may repeatedly transmit the MCCH at a regular time interval.

Also, the base station transmits feedback channel information and scrambling code information to each of the mobile stations at a MBMS service initial stage. In the method for transmitting MBMS data packet from a base station, the base station selects one of mobile stations and decides a feedback channel in order to allocate the decided feedback channel to the selected mobile station. Then, the base station transmits information about the radio resource location of a dedicated feedback channel and the scrambling cod to each of the mobile stations at a time of a mobile station receiving MBMS data. In a method of transmitting a MBMS data packet from a plurality of base stations, the base station decides a feedback channel to use and transmits common feedback channel information and scrambling code information to the mobile stations at a MBMS service initial stage.

The scheduling information for data transmission includes radio resource information for receiving data. The group identifier for the MBMS is a C-RNTI reserved and allocated by a base station. In other words, a base station reserves and allocates the C-RNTI for MBMS, and mobile stations use the allocated C-RNTI to receive a downlink control signal (L1/L2 control signals for MBMS).

When a packet based cellular system supports both of an incremental redundancy (IR) method and a chase combining (CR) method, the HARQ related information includes information about one of the IR method and the CR method to use and how to use each of the IR method and the CR method, and the maximum number to retransmit. If a packet base cellular system supports only one of the IR method and the CR method, the HARQ related information does not include information about selected one of the IR method and the CR method to use.

If necessary, the base station may transmit MCCH control information with a NACK feedback probability included. The NACK feedback probability is information for controlling a probability of transmitting NACK at mobile stations through a feedback channel when a large interference signal is generated between mobile stations although the NACK is transmitted through the feedback channel using the scrambling code as described above. The NACK feedback probability may not be used in the method for transmitting a MBMS data packet from a single base station.

After transmitting the scheduling information, the group ID information, and the HARQ related information, the base station transmits MBMS data packets to mobile stations at step S302. In the method for transmitting MBMS data packet from single base station, a MTCH is used as a logical channel, and a DL-SCH is used as a transport channel mapped to the MTCH. In the method for transmitting MBMS data packet from a plurality of base stations, a MTCH is used as a logical channel, and a MCH is used as a transport channel mapped to the MTCH.

The physical layer of a mobile station performs a CRC process for the data packets transmitted from the base station. If the CRC error is founded, the mobile station transmits a NACK to the base station through the feedback channel allocated by the base station at step S303. The feedback channel is a dedicated feedback channel in the method for transmitting MBMS data packet from single base station, and the feedback channel is a common feedback channel in the method for transmitting MBMS data packet from a plurality of base stations. When the mobile station transmits a response to the base station, the mobile station scrambles the response using the scrambling code transmitted from the base station and transmits the scrambled response through an allocated feedback channel.

Although a scrambling code uniquely allocated to each mobile station is used in the method for transmitting MBMS data packet from single base station, one of scrambling codes is randomly selected and used if a plurality of scrambling codes are provided in the method for transmitting MBMS data packet from a plurality of base stations. In other words, if a plurality of mobile stations transmit NACK to a base station through a feedback channel at the same time, the signal becomes significantly larger, thereby operating as a large interface to the other cell. In order to reduce the interface, a plurality of scrambling codes to mobile stations to select one of the provided scrambling codes when mobile stations transmit NACK through a feedback channel. The mobile stations randomly select one of the scrambling codes, scramble the NACK using the selected scrambling code, and transmits the scrambled NACK through a feedback channel. Accordingly, the signal dose not becomes larger in average because signals among mobile stations become random. Therefore, the signal dose not interfere other cells.

In case of no CRC error, a mobile station may transmit ACK or may not transmit ACK. In the method for transmitting MBMS data packet from a plurality of base stations, it is preferable for a mobile station not to transmit ACK through a common feedback channel if the CRC error is not found.

If a base station receives NACK from a mobile station through a feedback channel, the base station informs mobile stations about a radio resource location of a retransmission data having an error through a downlink control signal at step S304.

If a base station receives NACK from a mobile station in the method for transmitting MBMS data packet from a plurality of base stations, the base station inspects the necessity of updating an NACK feedback probability factor by detecting the interference amount of a common feedback channel. Then, if it is required to update the NACK feedback probability factor, the base station updates the NACK feedback probability factor and transmits the updated factor to the mobile station through a dedicated control channel MCCH.

If a large interference signal occurs although the NACK is scrambled using the selected scrambling code and the scrambled NACK is transmitted as described above, the base station uses an NACK feedback probability to control the interference signal not to occur. The base station transmits an NACK feedback probability to mobile stations through the MCCH. Mobile stations calculates a probability of transmitting NACK through an own feedback channel using the NACK feedback probability. Based on the calculated probability, the mobile stations may transmit NACK through a feedback channel or may not transmit NACK.

After transmitting the radio resource location of the retransmission data through the downlink control signal, the base station transmits the retransmission data to mobile stations through a transport channel at step S305. In the method for transmitting MBMS data packet from single base station, a downlink shared channel (DL-SCH) is used as the transport channel. MCH channel is used as a transport channel in the method for transmitting MBMS data packet from a plurality of base station

The retransmission data may be distributed through several frequencies and transmitted instead of assigning a predetermined frequency to transmit the retransmission data in order to prevent the retransmission data from giving great frequency diversity to mobile stations.

Meanwhile, a mobile station finds a location of a downlink control signal (L1/L2 control signal) allocated to MBMS using a MBMS service group ID, for example, C-RNTI, which is reserved and allocated by a base station and transmitted through a dedicated control channel. In general, a mobile station can decode the control signal location several times for finding the location of a downlink control signal. The location of the downlink control signal may be transmitted at a predetermined frequency space within a predetermined time after a mobile station transmits NACK through a feedback channel in order to reduce the decoding complexity of the mobile station.

A mobile station receives a retransmission data transmitted through a transport channel using a radio resource location obtained through a downlink control signal and performs a CRC process on the received retransmission data. The mobile station may repeatedly perform the above described processes for transmitting NACK through a feedback channel according to the CRC checking result. Also, the mobile station receives control information through a dedicated control channel MCCH if necessary, for example, if the MCCH control information changes.

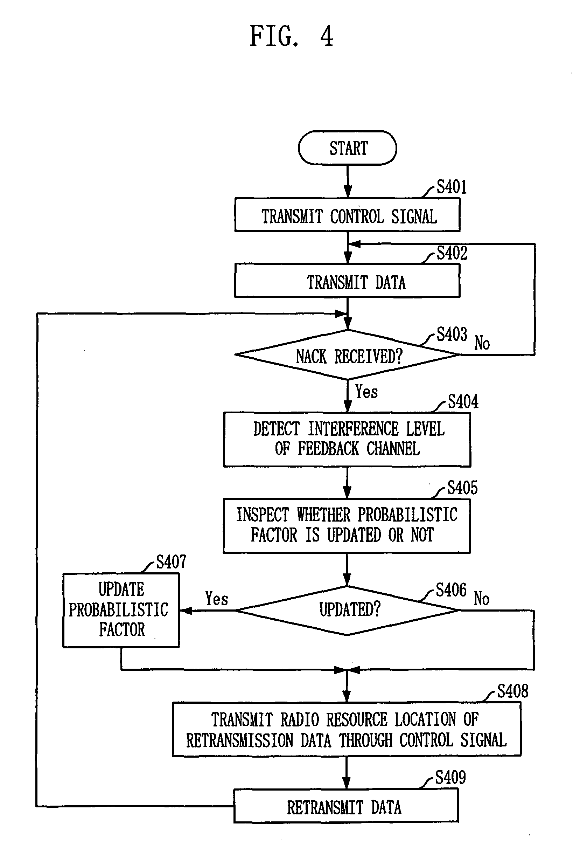

Fig. 4 is a flowchart of a method for transmitting MBMS data at a base station in accordance with an embodiment of the present invention. That is, Fig. 4 shows a method for transmitting MBMS data from a plurality of base stations.

Referring to Fig. 4, a base station transmits schedule information related to data transmission, HARQ related information, and a MBMS group ID C-RNTI to mobile stations through a dedicated control channel MCCH and a transport channel mapped to the MCCH at step S401. A downlink shared channel (DL-SCH) is used as a transport channel mapped to the location channel MCCH in the method for transmitting MBMS data packet from single base station. Also, a MCH channel is used as a transport channel mapped to the location channel MCCH in the method for transmitting MBMS data packet from a plurality of base stations. The base station repeatedly transmits a dedicated control channel MCCH at a regular interval.

Also, a base station transmits information about feedback channels to use and scrambling codes to be used in a feedback channel to mobile stations at a MBMS service initial stage.

In the method for transmitting MBMS data packet from a plurality of base stations, a NACK feedback probability may be transmitted to mobile stations through a dedicated control channel MCCH.

After transmitting the scheduling information, the group ID information, and the HARQ related information, the base station transmits MBMS data packets to the mobile stations at step S402. In the method for transmitting MBMS data packet from single base station, a MTCH is used as a logical channel, and a DL-SCH is used as a transport channel mapped to the MTCH. In the method for transmitting MBMS data packet from a plurality of base stations, a MTCH is used as a logical channel, and a MCH channel is used as a transport channel mapped to the MTCH.

After transmitting the MBMS data packets, if the base station receives NACK from a mobile station through a feedback channel at step S403, the base station detects the interference amount of a feedback channel at step S404 and inspects the necessity of updating an NACK feedback probability factor at step S405. If it is required to update a feedback probability factor at step 406, the base station updates a probability factor of a regularly transmitted dedicated control channel MCCH by updating the feedback probability factor at step S407. The operation of updating a feedback probability factor can be omitted in the method for transmitting MBMS data packet from single base station.

At step S408, the base station informs mobile stations about the radio resource location of a retransmission data in order to retransmit MBMS data packet with an error generated. The base station transmits a downlink control signal to a predetermined frequency space within a predetermined time after a mobile station transmits NACK through a feedback channel.

Then, the base station transmits a retransmission data to the mobile stations through a transport channel at step S409. The base station distributes the retransmission data through several frequencies and transmits the distributed retransmission data for transmitted data to give frequency diversity to mobile stations.

Meanwhile, a physical layer of a mobile station performs a CRC process on the received data in the method for transmitting MBMS data packet from a plurality of base stations. If an error is not generated, ACK is not transmitted to a base station. In this case, if a base station does not receive NACK from the through a feedback channel, the base station determines that all of the mobile stations receive data normally. Thus, the base station does not retransmit data. Since a system transmits data after deciding a transmission time for new data, the system transmits a data packet regardless of a feedback channel.

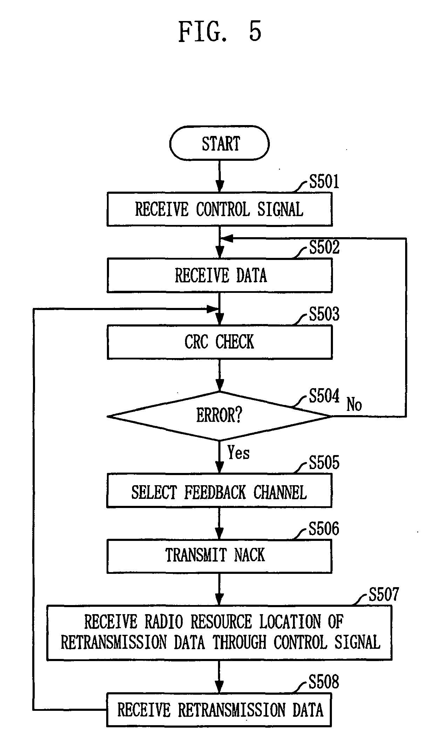

Fig. 5 is a flowchart of a method for receiving MBMS data at a mobile station in accordance with an embodiment of the present invention.

Referring to Fig. 5, a mobile station receives information about a radio resource location for a feedback channel and scrambling codes from a base station through a control channel at a MBMS service receiving initial stage.

At step S501, the mobile station receives scheduling information related to data transmission, HARQ related information, and a MBMS service ID C-RNTI through a dedicated control channel MCCH at a MBMS service receiving initial stage. The mobile station can receive a downlink control signal (L1/L2 control signal) for MBMS using the C-RNTI transferred from a base station.

In the method for transmitting MBMS data packet from a plurality of base stations, a mobile station receives an NACK feedback probability from a base station through the dedicated control channel MCCH.

The mobile station receives MBMS data packets transmitted according to the transmitted scheduling information transmitted through the MCCH channel at step S502. The physical layer of a mobile station performs a CRC process on the data packet transmitted from the base station at step S503. If the CRC error occurs at step S504, the mobile station calculates a probability of transmitting NACK through a feedback channel based on the NACK feedback probability transferred from the base station. The steps of using the feedback probability may be used in the method for transmitting MBMS data packet from a plurality of base stations. On the contrary, the steps of using the feedback probability are not performed in the method for transmitting MBMS data packet from single base station.

In the method for transmitting MBMS data packet from a plurality of base stations, the mobile station confirms a common feedback channel for transmitting NACK if it is decided to transmit a response to a feedback channel according to the calculated feedback probability, and the mobile station selects one of a plurality of scrambling codes at step S505. Then, the mobile station scrambles NACK using the selected scrambling code and transmits the scrambled NACK through a common feedback channel allocated by a base station at step S506. Herein, the common feedback channel is a feedback channel commonly used by a plurality of mobile stations and allocated by a base station.

In the method for transmitting MBMS data packet from single base station, a mobile station scrambles the CRC error inspecting result using a unique scrambling code allocated by a base station and transmits the scrambled CRC error inspecting result to the base station through a dedicated feedback channel allocated by a base station.

After transmitting NACK through a feedback channel to the base station, the mobile station receives a radio resource location of transmitted data through a downlink control signal (L1/L2 control signal) at step S507. In other words, the mobile station decodes a downlink control signal (L1/L2 control signal) allocated by MBMS using the MBMS ID, for example, C-RNTI, transferred through a dedicated control channel reserved and allocated by a base station.

The mobile station receives the retransmission data transmitted through a transport channel using the radio resource location obtained through a downlink control signal at step S508 and performs a CRC check process on the received retransmission data. The mobile station may repeatedly perform the step of transmitting NACK through the feedback channel according to the CRC inspection result at a predetermined times. The mobile station receives control information through a dedicated control channel MCCH when MCCH control information changes. In case of no error occurred, the mobile station may transmit ACK or may not transmit ACK.

In the method for transmitting MBMS data packet from a plurality of base stations, feedback channels are provided as many as the states of MBMS receiving mobile stations instead of providing the feedback channels as many as the number of MBMS receiving mobile stations in a cell.

In the method for transmitting MBMS data packet from single base station, it is required to a mobile station to maintain uplink synchronization. However, some of mobile stations dose not maintain uplink synchronization because the number of mobile stations is large in the method for transmitting MBMS data packet from a plurality of base stations.

In other words, a mobile station can distinguish a state of sustaining synchronization from a state of not sustaining synchronization. For example, a mobile station may be in a RRC connection state or a non-connection state in a 3GPP based system. Accordingly, the mobile station must have a capability of receiving MBMS service in both of the RRC connection state and the non-connection state. In the RRC connection state, a mobile station is allocated with a unique ID corresponding to a cell from the RRC layer of a base station. In the RRC connection state, a mobile station may sustain uplink synchronization or not sustain uplink synchronization. In the RRC non-connection state, the mobile station is not allocated with the ID of a cell and does not sustain uplink synchronization.

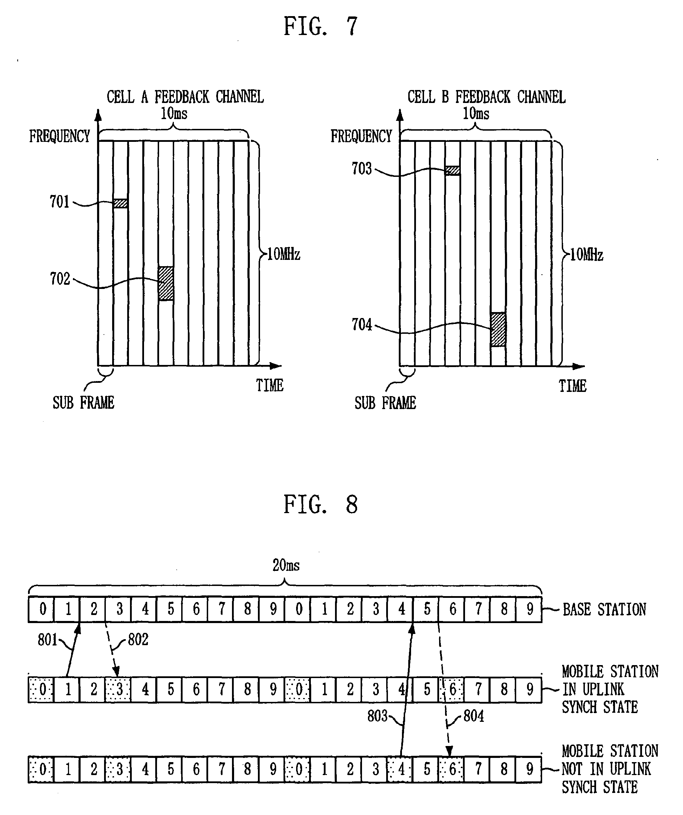

Fig. 7 is a diagram illustrating a feedback channel in accordance with an embodiment of the present invention.

As shown in Fig. 7, a base station allocates two channels having different sizes for an uplink synchronization sustaining state and an uplink synchronization non-sustaining state as feedback channels when cells A and B perform HARQ for MBMS data packet at the same time.

In case of cells A and B, a feedback channel of a mobile station in an uplink synchronization sustaining state is allocated first than a feedback channel of a mobile station in an uplink synchronization non-sustaining state. In Fig. 7, numeral references 701 and 703 denote feedback channels allocated to a mobile station in an uplink synchronization sustaining state. Numeral references 702 and 704 denote feedback channels allocated to a mobile station in an uplink synchronization non-sustaining state. In the cells A and B, a feedback channel is allocated in different spaces in a time domain and a frequency domain. For example, the cells A and B allocate a size of an uplink feedback channel using one or two subcarriers for about 1ms in a state of sustaining uplink synchronization and allocates the size using 1.25MHz for about 1ms in a state of non-sustaining uplink synchronization.

A reason of allocating the different sizes of feedback channels according to the uplink synchronization state of a mobile station will be described. Since a mobile station transmits only feedback contents to the uplink when the mobile station sustains synchronization to transmit a feedback channel to an uplink, the feedback channel can be small. However, the size of a feedback channel must be large because synchronization information must be transmitted to a base station when the uplink synchronization is not maintained.

Referring to Fig. 7, the feedback channel 701 for a mobile station in the uplink synchronization sustaining state is allocated previously than the feedback channel 702 for a mobile station in the uplink synchronization non-sustaining state.

Fixed locations of a downlink control signal and a feedback channel time may be provided for saving the power consumption of a mobile station in a RRC non-connection state. Since a mobile station continuously decodes a downlink control signal if the mobile station does not know when a downlink control signal is transmitted, the mobile station consumes the large amount of power. If the location of a feedback channel is not fixed, the information about a feedback channel location must be transmitted through a downlink control signal. Accordingly, the size of a downlink control signal increases. Recently, the downlink control signal (L1/L2 control signal) is not defined in a 3GPP LTE standard. The reason of separating feedback channels according to the states of a mobile station is to reduce the interference amount to a neighbor cell.

A mobile station in a state of sustaining synchronization may be allowed to transmit a feedback channel when the mobile stations in a state of sustaining synchronization and in a state of not sustaining synchronization generate errors on receiving data at the same time. After receiving a feedback channel, a base station transmits a downlink control signal and data, and mobile stations in the synchronization sustaining state and the synchronization non sustaining state receive retransmitted data.

As shown in Fig. 8, a chance of transmitting a feedback channel is allocated to a mobile station in an uplink synchronization sustaining state at the 2^{nd} subframe for 10ms at step S801. A chance of transmitting a feedback channel is allocated to a mobile station in an uplink synchronization non-sustaining state at the 5^{th} subframe at step S803. A chance of transmitting a feedback channel may be allocated to each of mobile stations in each state. A mobile station in an uplink synchronization sustaining state transmits NACK to a base station through a feedback channel at step S801 if the mobile station in the uplink synchronization sustaining state and the mobile station in the uplink synchronization non-sustaining state receive data with errors. Then, two of the mobile stations receive a downlink control signal at the 3^{rd} subframe from the base station at step S802. Each of the mobile stations confirms whether data is retransmitted or not at the 3^{rd} subframe, and receives the retransmitted data. If the mobile station in the state of not-sustaining uplink synchronization receives the retransmitted data, the feedback channel allocated at the 5^{th} subframe is not transmitted at step S803. The base station may allocate the feedback channel allocated at the 5^{th} subframe to transmit data related to a unicast service instead of MBMS.

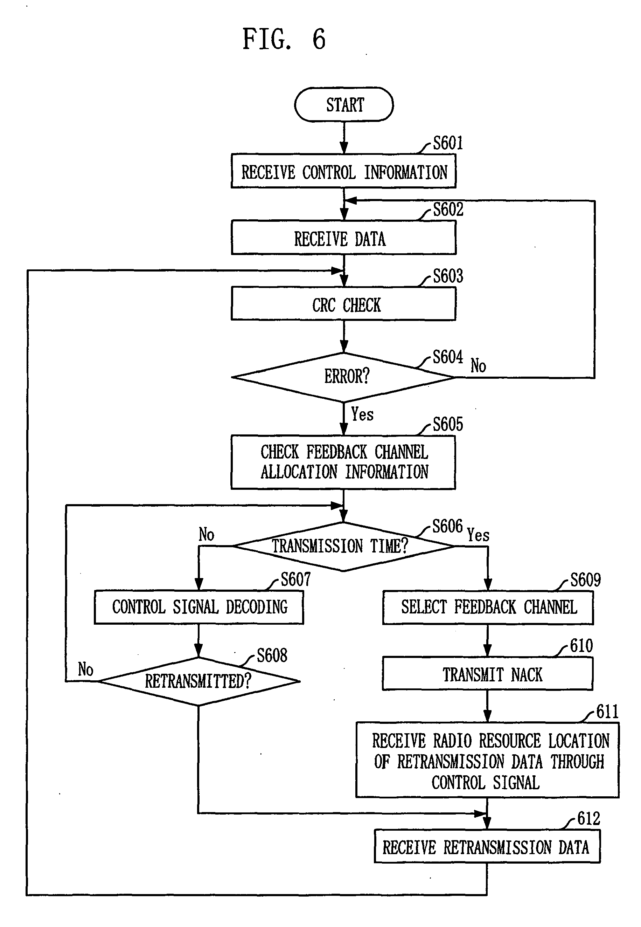

Fig. 6 is a flowchart of a method for receiving MBMS data at a mobile station in a method for transmitting MBMS data from a plurality of base station in accordance with another embodiment of the present invention.

Referring to Fig. 6, a mobile station receives scheduling information related to data transmission, HARQ related information, and a MBMS group ID C-RNTI from base stations through a dedicated control channel MCCH at step S601.

The mobile station receives information about a common feedback channel to be commonly used by mobile stations and scrambling codes to be used in the common feedback channel from base stations through a control channel at a MBMS receiving initiation stage. Herein, the base station allocates different common feedback channels according to the uplink synchronization state of a mobile station.

Then, the mobile station receives a MBMS data packet transmitted through a transport channel, preferably a MCH, according to the scheduling information transmitted through a MCCH channel at step S602. The mobile station performs a CRC check process for the MBMS data transmitted from base stations at step S603. If the CRC error occurs at step S604, the mobile station confirms the information about a feedback channel allocated to oneself at step S605.

As described above, a feedback channel allocated to a mobile station in a state of non-sustaining uplink synchronization is located later on a time domain than a feedback channel allocated to a mobile station in a state of sustaining uplink synchronization. If a current feedback channel transmission time is not a time for the mobile station in the state of non-sustaining uplink synchronization, the mobile station in the state of non-sustaining uplink synchronization decodes a downlink control signal (L1/L2 control signal) transmitted a base station along a feedback channel transmitted by a mobile station in a state of sustaining uplink synchronization at step S607. The mobile station determines as the retransmission of the MBMS data packet at step S608 if the downlink control signal includes a radio resource location for a transmitted data. Then, the mobile station receives retransmitted data transmitted through a transport channel using the radio resource location obtained through a downlink control signal at step S612.

If the downlink control signal does not include a radio resource location for retransmitted data at step S608, the mobile station randomly selects one of scrambling codes transmitted from a base station at step S609 in a transmission time of a feedback channel allocated to oneself. The mobile station scrambles NACK using the selected scrambling code and transmits the scrambled NACK through a common feedback channel allocated by a base station at step S610.

After the mobile station transmits NACK to a base station through a common feedback channel at step S610, the mobile station receives a radio resource location of transmitted data through a downlink control signal (L1/L2 control signal) at step S611. In other word, the mobile station decodes a downlink control signal (L1/L2 control signal) allocated to MBMS using the MBMS group ID (C-RNTI) that is reserved and allocated by a base station.

The mobile station receives data retransmitted through a transport channel using a radio resource location obtained through a downlink control signal at step S612. Then, the mobile station performs a CRC check process on the received data. The mobile station may repeatedly perform the above steps for transmitting NACK to a feedback channel at predetermined times. Also, the mobile station receives control information through a dedicated control channel MCCH if MCCH control information changes. Furthermore, the mobile station may transmit ACK or may not transmit ACK if the received MBMS data packet includes no CRC error at step S604.

The above described method according to the present invention can be embodied as a program and stored on a computer readable recording medium. The computer readable recording medium is any data storage device that can store data which can be thereafter read by the computer system. The computer readable recording medium includes a read-only memory (ROM), a random-access memory (RAM), a CD-ROM, a floppy disk, a hard disk and an optical magnetic disk.

While the present invention has been described with respect to certain preferred embodiments, it will be apparent to those skilled in the art that various changes and modifications may be made without departing from the scope of the invention as defined in the following claims.

### BRIEF DESCRIPTION OF THE DRAWINGS

Fig. 1 is a block diagram illustrating a MBMS network whether the present invention is applied to.
Fig. 2 is a detailed block diagram of Fig. 1.
Fig. 3 is a diagram for describing a method for transmitting MBMS data in a packet based cellular system in accordance with an embodiment of the present invention.
Fig. 4 is a flowchart of a method for transmitting MBMS data at a base station in accordance with an embodiment of the present invention.
Fig. 5 is a flowchart of a method for receiving MBMS data at a mobile station in accordance with an embodiment of the present invention.
Fig. 6 is a flowchart of a method for receiving MBMS data at a mobile station in accordance with another embodiment of the present invention.
Fig. 7 is a diagram illustrating a feedback channel in accordance with an embodiment of the present invention.
Fig. 8 is a diagram for describing the allocation of a feedback channel and an hybrid automatic repeat request procedure in accordance with an embodiment of the present invention.

### INDUSTRIAL APPLICABILITY

A method for transmitting and receiving MBMS data in a packet based cellular system according to an embodiment of the present invention improves the error correction efficiency of received data by applying HARQ scheme while minimizing resource usage in transmitting of MBMS data to a plurality of mobile stations based on a point-to-multipoint method in a packet based cellular system. Also, in the method for transmitting and receiving MBMS data in a packet based cellular system according to an embodiment of the present invention, a base station can transmit MBMS data packets regardless of the number of mobile stations. Therefore, it is not required to perform a complicated procedure such as a bearer switching process for switching a process method to a point-to-point method or to a point-to-multipoint method according to the number of mobile stations through counting or recounting processes.

## Claims

1. A method for transmitting a multimedia broadcast multicast service MBMS, comprising:
transmitting a MBMS to mobile stations (50) in a cell through downlink channel;
allocating a dedicated uplink feedback channel of a mobile station to the mobile stations (50) in the cell to enable the mobile stations in the cell to report a HARQ response;
receiving a HARQ response signal from a mobile station through the dedicated uplink feedback channel in order to inform whether the MBMS data is successfully received; and
when retransmission of the MBMS is needed, retransmitting the MBMS to the mobile station through a downlink channel using MBMS service group identifier information, whereby the MBMS service group identifier is a reserved and allocated cell radio network temporary identifier C-RNTI and enables mobile stations to receive downlink control signals, which include the resource information of retransmission data and the resource information of a feedback channel for retransmission data.

2. The method of claim 1, wherein a scheduling of radio resource for the MBMS is done by a base station (40).

3. The method of claim 1 or 2, wherein a mobile station to which the dedicated uplink feedback channel is allocated is in RRC connection state.

4. The method of one of claims 1 to 3, wherein the HARQ response signal is scrambled using a constant amplitude zero auto-correction CAZAC code in a frequency domain, and a Hadamard HD code in a time domain.

5. The method of one of claims 1 to 4, wherein the MBMS is transmitted to the mobile stations in the cell using point-to multipoint method.

6. The method of one of claims 1 to 5, wherein MBMS channels includes MBMS traffic channel MTCH and MBMS control channel MCCH.

7. A method for receiving a multimedia broadcast multicast service MBMS, comprising:
receiving a MBMS from a base station (40) through downlink channel;
being allocated to a dedicated uplink feedback channel from the base station to report a HARQ response to the base station (40);
transmitting a HARQ response signal through the dedicated uplink feedback channel in order to inform whether the MBMS data is successfully received; and
re-receiving the MBMS from the base station (40) through a downlink channel using MBMS service group identifier information when retransmission of the MBMS is needed, whereby the MBMS service group identifier is a reserved and allocated cell radio network temporary identifier C-RNTI and enables to receive downlink control signals, which include the resource information of retransmission data and the resource information of a feedback channel for retransmission data.

8. The method of claim 7, wherein a scheduling of radio resource for the MBMS is done by the base station.

9. The method of claim 7 or 8, wherein a mobile station (50) to which the dedicated uplink feedback channel is allocated is in RRC connection state.

10. The method of one of claims 7 to 9, wherein the HARQ response signal is scrambled using a constant amplitude zero auto-correction CAZAC code in a frequency domain, and a Hadamard HD code in a time domain.

11. The method of one of claims 7 to 10, wherein the MBMS is transmitted to the mobile stations in the cell using point-to multipoint method.

12. The method of one of claims 7 to 11, wherein the MBMS channel includes MBMS traffic channel MTCH and MBMS control channel MCCH.

13. The method of one of claims 7 to 12, wherein the method further comprising:
combining the received MBMS and the re-received MBMS.

14. A computer readable medium recorded a program which prosecutes a MBMS transmitting method, the method comprising;
transmitting a MBMS to mobile stations (50) in a cell through a downlink channel;
allocating a dedicated uplink feedback channel of a mobile station (50) to the mobile stations in the cell to enable the mobile stations in the cell to report a HARQ response;
receiving a HARQ response signal from a mobile station through the dedicated uplink feedback channel in order to inform whether the MBMS data is successfully received; and
when retransmission of the MBMS is needed, retransmitting the MBMS to the mobile station through a downlink channel using MBMS service group identifier information, whereby the MBMS service group identifier is a reserved and allocated cell radio network temporary identifier C-RNTI and enables mobile stations to receive downlink control signals, which include the resource information of retransmission data and the resource information of a feedback channel for retransmission data.

15. A computer readable medium recorded a program which prosecutes a MBMS receiving method, the method comprising:
receiving a MBMS from a base station (40) through a downlink channel;
being allocated to a dedicated uplink feedback channel from the base station (40) to report a HARQ response;
transmitting a HARQ response signal through the dedicated uplink feedback channel in order to inform whether the MBMS data is successfully received; and
re-receiving the MBMS from the base station (40) through a downlink channel using MBMS service group identifier information when retransmission of the MBMS is needed, whereby the MBMS service group identifier is a reserved and allocated cell radio network temporary identifier C-RNTI and enables mobile stations to receive downlink control signals, which include the resource information of retransmission data and the resource information of a feedback channel for retransmission data.

## Patentansprüche

1. Verfahren zum Übertragen eines Multimedia-Broadcast-Multicast-Service MBMS, umfassend:
Übertragen eines MBMS an Mobilstationen (50) in einer Zelle durch einen Downlink-Kanal;
Zuordnen eines dedizierten Uplink-Feedback-Kanals einer Mobilstation zu den Mobilstationen (50) in der Zelle, um es den Mobilstationen in der Zelle zu ermöglichen, eine HARQ-Antwort zu melden;
Empfangen eines HARQ-Antwortsignals von einer Mobilstation durch den dedizierten Uplink-Feedback-Kanal, um zu informieren, ob die MBMS-Daten erfolgreich empfangen sind; und
wenn die erneute Übertragung des MBMS benötigt wird, erneutes Übertragen des MBMS zu den Mobilstationen durch einen Downlink-Kanal unter Verwendung von MBMS-Service-Group-Identifier-Informationen, wobei der MBMS-Service-Group-Identifier ein reservierter und zugeordneter Cell-Radio-Network-Temporary-Identifier C-RNTI ist und es den Mobilstationen ermöglicht, Downlink-Steuersignale zu empfangen, welche die Ressourceninformationen von Daten zum erneuten Übertragen und die Ressourceninformationen eines Feedback-Kanals für die Daten zum erneuten Übertragen beinhalten.

2. Verfahren nach Anspruch 1, wobei eine Ablaufplanung einer Radioressource für den MBMS durch eine Basisstation (40) verrichtet wird.

3. Verfahren nach Anspruch 1 oder 2, wobei eine Mobilstation, zu der ein dedizierter Uplink-Feedback-Kanal zugeordnet ist, in einem RRC-Verbindungszustand ist.

4. Verfahren nach einem der Ansprüche 1 bis 3, wobei das HARQ-Antwortsignal unter Verwendung eines Constant-Amplitude-Zero-Auto-Correlation-Codes CAZAC in einem Frequenzraum und einem Hadamard-Code HD in einem Zeitraum kodiert wird.

5. Verfahren nach einem der Ansprüche 1 bis 4, wobei der MBMS an die Mobilstationen in der Zelle unter Verwendung eines Point-to-Multipoint-Verfahrens übertragen wird.

6. Verfahren nach einem der Ansprüche 1 bis 5, wobei MBMS-Kanäle MBMS-Verkehrskanäle MTCH und MBMS-Steuerkanäle MBCCH beinhalten.

7. Verfahren zum Empfangen eines Multimedia-Broadcast-Multicast-Service MBMS, umfassend:
Empfangen eines MBMS von einer Basisstation (40) durch einen Downlink-Kanal;
Zugeordnet werden zu einem dedizierten Uplink-Feedback-Kanals von der Basisstation (40), um es zu ermöglichen, eine HARQ-Antwort der Basisstation (40) zu melden;
Übertragen eines HARQ-Antwortsignals durch den dedizierten Uplink-Feedback-Kanal, um zu informieren, ob die MBMS-Daten erfolgreich empfangen sind, und
erneutes Empfangen des MBMS von der Basisstation (40) durch einen Downlink-Kanal unter Verwendung von MBMS-Service-Group-Identifier-Informationen, wenn die erneute Übertragung des MBMS benötigt wird, wobei der MBMS-Service-Group-Identifier ein reservierter und zugeordneter Cell-Radio-Network-Temporary-Identifier C-RNTI ist und es ermöglicht, Downlink-Steuersignale zu empfangen, welche die Ressourceninformationen von Daten zum erneuten Übertragen und die Ressourceninformationen eines Feedback-Kanals für die Daten zum erneuten Übertragen beinhalten.

8. Verfahren nach Anspruch 7, wobei eine Ablaufplanung einer Radioressource für den MBMS durch die Basisstation verrichtet wird.

9. Verfahren nach Anspruch 7 oder 8, wobei eine Mobilstation (50), der ein dedizierter Uplink-Feedback-Kanal zugeordnet ist, in einem RRC-Verbindungszustand ist.

10. Verfahren nach einem der Ansprüche 7 bis 9, wobei das HARQ-Antwortsignal unter Verwendung eines Constant-Amplitude-Zero-Auto-Correlation-Codes CAZAC in einem Frequenzraum und einem Hadamard-Code HD in einem Zeitraum kodiert wird.

11. Verfahren nach einem der Ansprüche 7 bis 10, wobei der MBMS an die Mobilstationen in der Zelle unter Verwendung eines Point-to-Multipoint-Verfahrens übertragen wird.

12. Verfahren nach einem der Ansprüche 7 bis 11, wobei MBMS-Kanäle MBMS-Verkehrskanäle MTCH und MBMS-Steuerkanäle MBCCH beinhalten.

13. Verfahren nach einem der Ansprüche 7 bis 12, wobei das Verfahren ferner umfaßt:
Kombinieren des empfangenen MBMS und des erneut empfangenen MBMS.

14. Computerlesbares Medium mit einem aufgezeichneten Programm, welches ein MBMS-Übertragungsverfahren durchführt, wobei das Verfahren umfaßt:
Übertragen eines MBMS an Mobilstationen (50) in einer Zelle durch einen Downlink-Kanal;
Zuordnen eines dedizierten Uplink-Feedback-Kanals einer Mobilstation zu den Mobilstationen (50) in der Zelle, um es den Mobilstationen in der Zelle zu ermöglichen, eine HARQ-Antwort zu melden;
Empfangen eines HARQ-Antwortsignals von einer Mobilstation durch den dedizierten Uplink-Feedback-Kanal, um zu informieren, ob die MBMS-Daten erfolgreich empfangen sind; und
wenn die erneute Übertragung des MBMS benötigt wird, erneutes Übertragen des MBMS zu den Mobilstationen durch einen Downlink-Kanal unter Verwendung von MBMS-Service-Group-Identifier-Informationen, wobei der MBMS-Service-Group-Identifier ein reservierter und zugeordneter Cell-Radio-Network-Temporary-Identifier C-RNTI ist und es den Mobilstationen ermöglicht, Downlink-Steuersignale zu empfangen, welche die Ressourceninformationen von Daten zum erneuten Übertragen und die Ressourceninformationen eines Feedback-Kanals für die Daten zum erneuten Übertragen beinhalten.

15. Computerlesbares Medium mit einem aufgezeichneten Programm, welches ein MBMS-Empfangsverfahren durchführt, wobei das Verfahren umfaßt:
Empfangen eines MBMS von einer Basisstation (40) durch einen Downlink-Kanal;
Zugeordnet werden zu einem dedizierten Uplink-Feedback-Kanals von der Basisstation (40), um es zu ermöglichen, eine HARQ-Antwort zu melden;
Übertragen eines HARQ-Antwortsignals durch den dedizierten Uplink-Feedback-Kanal, um zu informieren, ob die MBMS-Daten erfolgreich empfangen sind; und
erneutes Empfangen des MBMS von der Basisstation (40) durch einen Downlink-Kanal unter Verwendung von MBMS-Service-Group-Identifier-informationen, wenn die erneute Übertragung des MBMS benötigt wird, wobei der MBMS-Service-Group-Identifier ein reservierter und zugeordneter Cell-Radio-Network-Temporary-Identifier C-RNTI ist und es Mobilstationen ermöglicht, Downlink-Steuersignale zu empfangen, welche die Ressourceninformationen von Daten zum erneuten Übertragen und die Ressourceninformationen eines Feedback-Kanals für die Daten zum erneuten Übertragen beinhalten.

## Revendications

1. Procédé de transmission d'un service de multidiffusion / diffusion multimédia, MBMS, comportant :
transmettre un service MBMS à des stations mobiles (50) présentes dans une cellule, via un canal en liaison descendante ;
affecter un canal de rétroaction en liaison montante dédié, d'une station mobile aux stations mobiles (50) présentes dans la cellule, en vue de permettre aux stations mobiles présentes dans la cellule de signaler une réponse de demande HARQ ;
recevoir un signal de réponse de demande HARQ à partir d'une station mobile, par le biais du canal de rétroaction en liaison montante dédié, visant à indiquer si les données de service MBMS sont correctement reçues ; et
lorsqu'une retransmission du service MBMS est nécessaire, retransmettre le service MBMS à la station mobile, via un canal en liaison descendante, en utilisant des informations d'identifiant de groupes de services MBMS, moyennant quoi l'identifiant de groupes de services MBMS est un identifiant temporaire de réseau radio cellulaire réservé et affecté, C-RNTI, qui permet aux stations mobiles de recevoir des signaux de commande de liaison descendante, lesquels incluent les informations de ressources de données de retransmission et les informations de ressources d'un canal de rétroaction pour les données de retransmission.

2. Procédé selon la revendication 1, dans lequel un ordonnancement de ressources radio pour le service MBMS est mis en oeuvre par une station de base (40).

3. Procédé selon la revendication 1 ou 2, dans lequel une station mobile à laquelle le canal de rétroaction en liaison montante dédié est affecté est dans un état de connexion de commande RRC.

4. Procédé selon l'une quelconque des revendications 1 à 3, dans lequel le signal de réponse de demande HARQ est brouillé au moyen d'un code à autocorrélation nulle et amplitude constante, CAZAC, dans un domaine fréquentiel, et d'un code de Hadamard, HD, dans un domaine temporel.

5. Procédé selon l'une quelconque des revendications 1 à 4, dans lequel le service MBMS est transmis aux stations mobiles présentes dans la cellule au moyen d'un procédé point à multipoint.

6. Procédé selon l'une quelconque des revendications 1 à 5, dans lequel le canal de service MBMS comporte un canal de trafic de service MBMS, MTCH, et un canal de commande de service MBMS, MCCH.

7. Procédé de réception d'un service de multidiffusion / diffusion multimédia, MBMS, comportant :
la réception d'un service MBMS, à partir d'une station de base (40), via un canal en liaison descendante ;
l'affectation à un canal de rétroaction en liaison montante dédié, à partir de la station de base, en vue de signaler une réponse de demande HARQ à la station de base (40) ;
la transmission d'un signal de réponse de demande HARQ, par le biais du canal de rétroaction en liaison montante dédié, visant à indiquer si les données de service MBMS sont reçues correctement ; et
la réception, à nouveau, du service MBMS, à partir de la station de base (40), par le biais d'un canal en liaison descendante, en utilisant des informations d'identifiant de groupes de services MBMS, lorsque la retransmission du service MBMS est nécessaire, moyennant quoi l'identifiant de groupes de services MBMS est un identifiant temporaire de réseau radio cellulaire réservé et affecté, C-RNTI, qui permet de recevoir des signaux de commande de liaison descendante, lesquels incluent les informations de ressources de données de retransmission et les informations de ressources d'un canal de rétroaction pour les données de retransmission.

8. Procédé selon la revendication 7, dans lequel un ordonnancement de ressources radio pour le service MBMS est mis en oeuvre par la station de base.

9. Procédé selon la revendication 7 ou 8, dans lequel une station mobile (50) à laquelle est affecté le canal de rétroaction en liaison montante dédié est dans un état de connexion de commande RRC.

10. Procédé selon l'une quelconque des revendications 7 à 9, dans lequel le signal de réponse de demande HARQ est brouillé au moyen d'un code à autocorrélation nulle et amplitude constante, CAZAC, dans un domaine fréquentiel, et d'un code de Hadamard, HD, dans un domaine temporel.

11. Procédé selon l'une quelconque des revendications 7 à 10, dans lequel le service MBMS est transmis aux stations mobiles présentes dans la cellule au moyen d'un procédé point à multipoint.

12. Procédé selon l'une quelconque des revendications 7 à 11, dans lequel le canal de service MBMS comporte un canal de trafic de service MBMS, MTCH, et un canal de commande de service MBMS, MCCH.

13. Procédé selon l'une quelconque des revendications 7 à 12, dans lequel le procédé comprend en outre :
la combinaison du service MBMS reçu et du service MBMS reçu à nouveau.

14. Support lisible par ordinateur dans lequel est enregistré un programme qui met en oeuvre un procédé de transmission de service MBMS, le procédé comprenant :
la transmission d'un service MBMS à des stations mobiles (50) présentes dans une cellule, par le biais d'un canal en liaison descendante ;
l'affectation d'un canal de rétroaction en liaison montante dédié, d'une station mobile (50) aux stations mobiles présentes dans la cellule, en vue de permettre aux stations mobiles présentes dans la cellule de signaler une réponse de demande HARQ ;
la réception d'un signal de réponse de demande HARQ à partir d'une station mobile, par le biais du canal de rétroaction en liaison montante dédié, visant à indiquer si les données de service MBMS sont correctement reçues ; et
lorsqu'une retransmission du service MBMS est nécessaire, la retransmission du service MBMS à la station mobile, par le biais d'un canal en liaison descendante, en utilisant des informations d'identifiant de groupes de services MBMS, moyennant quoi l'identifiant de groupes de services MBMS est un identifiant temporaire de réseau radio cellulaire réservé et affecté, C-RNTI, qui permet aux stations mobiles de recevoir des signaux de commande de liaison descendante, lesquels incluent les informations de ressources de données de retransmission et les informations de ressources d'un canal de rétroaction pour les données de retransmission.

15. Support lisible par ordinateur sur lequel est enregistré un programme qui met en oeuvre un procédé de transmission de service MBMS, le procédé comprenant :
la réception d'un service MBMS, à partir d'une station de base (40), par le biais d'un canal en liaison descendante ;
l'affectation à un canal de rétroaction en liaison montante dédié, à partir de la station de base (40), en vue de signaler une réponse de demande HARQ ;
la transmission d'un signal de réponse de demande HARQ, par le biais du canal de rétroaction en liaison montante dédié, visant à indiquer si les données de service MBMS sont reçues correctement ; et
la réception, à nouveau, du service MBMS, à partir de la station de base (40), par le biais d'un canal en liaison descendante, en utilisant des informations d'identifiant de groupes de services MBMS, lorsque la retransmission du service MBMS est nécessaire, moyennant quoi l'identifiant de groupes de services MBMS est un identifiant temporaire de réseau radio cellulaire réservé et affecté, C-RNTI, qui permet à des stations mobiles de recevoir des signaux de commande de liaison descendante, lesquels incluent les informations de ressources de données de retransmission et les informations de ressources d'un canal de rétroaction pour les données de retransmission.
